# EUROPEAN PATENT APPLICATION

(11) **EP 1 127 902 A1**
(43) Date of publication of application: **29.08.2001**
(21) Application number: 00200668.2
(22) Date of filing: 25.02.2000
(51) Int. Cl.: C08F 230/08, C09D 5/16, C09D 143/04, C09D 133/04

(54) **Metal-free binders for self-polishing anti-fouling paints**

(71) Applicant: SIGMA COATINGS B.V., 1422 AD Uithoorn (NL)
(72) Inventor: Vos, Marcel, 1272 HS Huizen (NL); Gillard, Michel, 5032 Corroy-le-Chateau (BE); Demaret, Jan-Pol, 7190 Ecaussinnes (BE)
(74) Representative: Leyder, Francis

(57) **Abstract**

A film-forming polymer is prepared by polymerisation of:
- from 4 to 50 mol% of monomer units A selected from the group consisting of the trialkylsilyl esters of an ethylenically unsaturated carboxylic acid, and mixtures thereof;
- from 5 to 45 mol% of monomer units B selected from the group consisting of the N-vinyl lactam monomers of general formula CH2=CH-NR""-CO-R'|, the N-vinyl amides of general formula CH2=CH-N-CO-R", the monomers of general formula CH2=CR"'-COO-R""-NR""-CO-R'|, the monomers of general formula CH2=CR"'-COO-R""-N-CO-R", 2-pyrrolidone-1-isoprenyl ketone, and mixtures thereof, wherein
   - R' is a n-alkylidene radical having 2 to 8 carbon atoms,
   - R" is selected from the group consisting of alkyl, cycloalkyl, aryl, alkylaryl and arylalkyl radicals having a maximum of 18 carbon atoms,
   - R''' is H or CH3,
   - R"" is a n-alkylidene radical having from 1 to 8 carbon atoms,
   - R""' is H or R",
- the balance of the monomer units being monomer units C selected from the group consisting of the esters of ethylenically unsaturated carboxylic acids with C1-C18 alcohols, styrene, alpha-methyl styrene, vinyl toluenes, and mixtures thereof.

Anti-fouling paints having self-polishing properties in sea water and in freshwater are prepared which contain as essential components the film-forming polymers and anti-foulants.

## Description

The present invention relates to metal-free binders for self-polishing anti-fouling paints. It also relates to their use in self-polishing anti-fouling paints. The invention further relates to a method for the regulation of the erosion rate of tri-alkylsilyl acrylate polymers.

The performance of a ship fails off when marine organisms grow on the submarine parts of her hull.

The extent of marine fouling is controlled by applying to the hull a top coat paint comprising anti-fouling agents. The anti-fouling agents are biocides that are freed from the paint surface at a rate such that their concentration is lethal to marine organisms near the surface.

GB-A-1457590 disclosed a film-forming copolymer containing 50-80 wt% triorganotin monomer, which gradually dissolves so that (i) a fresh anti-fouling paint surface is continuously revealed, and (ii) the surface of the coating is continuously smoothened.

Technologies based on the hydrolysis of the tin-ester bonds at the surface of the binder dominated the market for some 20 years. The reaction takes place only at the surface where diffusion and dilution processes are strong enough to propagate this reaction. The reaction products thus formed are a stable water-soluble methacrylic binder with carboxylic pendant groups and tributyltin oxide (or TBTO, not very stable; TBT hydroxide and chloride are also mentioned as reaction products). The surface layer of the coating loses strength by this process. Additionally, steady leaching of water-soluble pigments and biocides also weakens the surface layer. The surface of the coating thus gradually erodes by the frictional forces of the water exerted by the movement of the ship.

EP-A-0218573 disclosed a polymer for use in marine anti-fouling paint. The polymer is prepared by polymerisation of:
- from 20 to 45 wt% of monomer units A of at least one triorganotin salt of an olefinically unsaturated carboxylic acid,
- from 5 to 35 wt% of at least one comonomer B selected from the group comprising VP (vinylpyrrolidone), VPi (vinylpiperidone) and VC (vinylcaprolactam), the total of A + B being of from 40 to 70 wt% of the polymer composition, and the balance of the polymer being monomer units C of at least one CI-C4 alkyl methacrylate and/or styrene.

By 1987, tributyltin (TBT) had been shown to leach into the water, harming sea life, possibly entering the food chain, and causing deformations in oysters and sex changes in whelks. Its use was banned for use on vessels with hulls of 25m or less, but the 1987 ruling left an essential exemption for larger vessels until alternatives were found. Some countries, such as Japan, have nevertheless already banned organotins in anti-fouling paints for most ships

The Marine Environmental Protection Committee (MEPC) of the International Maritime Organization (IMO), a unit of the United Nations, has now recently approved a draft resolution to phase out and eventually prohibit the use of toxic organotin derivatives in anti-fouling paints. The working proposal, drafted by the U.S.A., which was agreed by the IMO Assembly in November 1999, includes a deadline of January 1, 2003 for the application of TBT-containing anti-foulants on ships, and a second deadline of January 1, 2008 for the complete prohibition of anti-fouling paints containing organotins. While no firm date has been set, it was agreed that the diplomatic conference to finalise and adopt the draft anti-fouling instrument will take place in the 2000/2001 biennium.

There is therefore a need in the art for improved erodible anti-fouling paint compositions comprising a film-forming polymer containing no organotin monomer, while retaining the good anti-fouling and self-polishing properties of the tin-containing anti-fouling paints of the prior art.

EP-A-131626 (M&T) disclosed the use of various hydrolysable groups instead of the triorganotin groups. Amongst them, the use of triorganosilyl groups was disclosed. Hydrolysis of the ester bond of triorganosilyl (meth)acrylate yields a water-soluble binder and a non-toxic siloxane. EP-A-297505, EP-A-646630, EP-A-714957, EP-A-775733, EP-A-802243, US-A-5436284 and WO91/14743 all disclosed tentative improvements. However, paint stability and erosion properties have been reported to be inadequate.

Indeed, it is common general knowledge that the hydrolysis rate of tributyltin methacrylate/methyl methacrylate [TBTMA/MMA] copolymers in alkaline water can be regulated easily over a wide range by adapting the TBTMA content. Also, there is a direct relation between the said hydrolysis rate and the erosion rate in seawater (which has a pH around 8) of anti-fouling paints prepared using the said TBTMA/MMA copolymers (the higher the TBTMA-content, the higher the erosion rate). The same behaviour is claimed for corresponding trialkylsilyl copolymers, but paints prepared with the known copolymers do not seem to show the required properties.

We have observed that the rate of hydrolysis of trialkylsilyl (meth)acrylate [R3Si(M)A]/methyl (meth)acrylate [M(M)A] copolymers with R= CnH2n+1 and n= 3 or 4 in alkaline solutions up to pH 13 varies from about zero to very slow. We also observed that the erosion rates of anti-fouling paints prepared with said copolymers were too low and showed only a marginal dependence on the R3Si(M)A content. It was therefore thought impossible to design anti-fouling paint formulations with a high erosion rate with the known polymers.

US-A-5436284 (NOF) proposed to use copolymers of trialkylsilyl monomers and ether comonomers. EP-A-714957 (NOF) proposed to use copolymers of trialkylsilyl monomers and comonomers containing a hemiacetal ester group.

EP-A-775733 (Chugoku) proposed to blend copolymers of trialkylsilyl monomers with a chlorinated paraffin. EP-A-802243 (NOF) proposed to blend copolymers of trialkylsilyl monomers with rosin.

WO91/14743 (Courtaulds) proposed the use as stabiliser of a C4+ monoamine or a quaternary ammonium compound.

There is therefore a need in the art for improved erodible anti-fouling paint compositions comprising a film-forming polymer containing organosilyl monomers, while retaining the good anti-fouling and self-polishing properties of the tin-containing anti-fouling paints of the prior art.

An object of the present invention is to provide alternative metal-free binders for self-polishing paints.

Another object is to provide improved erodible anti-fouling paint compositions for use as top coat paints for ships' hull.

A further object of the invention is to provide an improved polymeric binder for an anti-fouling paint which hydrolyses at a predetermined rate in the presence of water.

Yet another object is to provide a method for the regulation of the erosion rate of tri-alkylsilyl acrylate copolymers.

Accordingly, the present invention provides a film-forming polymer prepared by polymerisation of:
- from 4 to 50 mol% of monomer units A selected from the group consisting of the trialkylsilyl esters of an ethylenically unsaturated carboxylic acid, and mixtures thereof;
- from 5 to 45 mol% of monomer units B selected from the group consisting of the N-vinyl lactam monomers of general formula CH2=CH-NR""'-CO-R'|, the N-vinyl amides of general formula CH2=CH-N-CO-R", the monomers of general formula CH2=CR"'-COO-R""-NR""'-CO-R'|, the monomers of general formula CH2=CR"'-COO-R""-N-CO-R", 2-pyrrolidone-1-isoprenyl ketone, and mixtures thereof, wherein
- R' is a n-alkylidene radical having 2 to 8 carbon atoms,
- R" is selected from the group consisting of alkyl, cycloalkyl, aryl, alkylaryl and arylalkyl radicals having a maximum of 18 carbon atoms,
- R"' is H or CH3,
- R"" is a n-alkylidene radical having from 1 to 8 carbon atoms,
- R""' is H or R",
and
- the balance of the monomer units being monomer units C selected from the group consisting of the esters of ethylenically unsaturated carboxylic acids with C1-C18 alcohols, styrene, alpha-methyl styrene, vinyl toluenes, and mixtures thereof.

In monomers A, the ethylenically unsaturated monomer is preferably selected from the group consisting of acrylic acid, methacrylic acid, maleic acid, fumaric acid, and mixtures thereof, most preferably selected from the group consisting of acrylic acid, methacrylic acid, and mixtures thereof.

The alkyl groups of the trialkylsilyl radical in monomer units A are independently selected from the group consisting of C1 to C8 alkyl groups, preferably C3 and C4, more preferably isopropyl and n-butyl. The more carbon atoms in the alkyl groups of the trialkylsilyl monomers A, the more B monomer is needed in the copolymer to provide the appropriate erosion rate.

The amount of monomer units A used to prepare the film-forming polymer is preferably of from 8 to 40 mol%, more preferably of from 15 to 35 mol%, most preferably of from 20 to 30 mol%.

Monomer units B can be N-vinyl lactam monomers of general formula CH2=CH-N-CO-R'|, wherein R' is a n-alkylidene radical having 2 to 8 carbon atoms, preferably 2 to 4 carbon atoms, more preferably 3 carbon atoms. The most preferred monomer unit B is N-vinyl pyrrolidone.

Monomer units B can also be N-vinyl amides of general formula CH2=CH-N-CO-R", wherein R" is selected from the group consisting of alkyl, cycloalkyl, aryl, alkylaryl and arylalkyl radicals having a maximum of 18 carbon atoms, preferably 2 to 12 carbon atoms, more preferably 2 to 6 carbon atoms.

Monomer units B can further be monomers of general formula CH2=CR"'-COO-R""-NR""'-CO-R'|, wherein R"' is H or CH3, R""' is R" (as defined above) or preferably H, R' is a n-alkylidene radical having 2 to 8 carbon but preferably such that the terminal cycle is 2-pyrrolidone. Preferably, R"' is CH3; examples of such monomers are described in Polymer 39(17), 4165-9, 1998.

Monomer units B can still further be monomers of general formula CH2=CR"'-COO-R""-N-CO-R", wherein R"' is H or CH3, R"" is a n-alkylidene radical having from 1 to 8 carbon atoms, and R" is selected from the group consisting of alkyl, cycloalkyl, aryl, alkylaryl and arylalkyl radicals having a maximum of 18 carbon atoms.

The amount of monomer units B used to prepare the film-forming polymer is preferably of from 7.5 to 40 mol%, more preferably of from 10 to 30 mol%, most preferably of from 15 to 20 mol%.

Monomer units C are preferably selected from the group consisting of the esters of ethylenically unsaturated carboxylic acids with C1-C18 alcohols, and mixtures thereof. The ethylenically unsaturated carboxylic acid is more preferably selected from the group consisting of acrylic acid, methacrylic acid, maleic acid, fumaric acid, and mixtures thereof, most preferably selected from the group consisting of acrylic acid, methacrylic acid, and mixtures thereof. The alcohol may be an aliphatic or a cycloaliphatic alcohol, and it may be linear or branched; it is more preferably selected from C1-C10 alcohols, more preferably from C1-C4 alcohols, most preferably from C1-C2 alcohols. Typical examples of monomer units of the ester type are stearyl (meth)acrylate, isobornyl (meth)acrylate, lauryl methacrylate, n-butyl (meth)acrylate, isobutyl (meth)acrylate, ethyl (meth)acrylate and methyl (meth)acrylate.

The amount of monomer units C used to prepare the film-forming polymer is preferably of at least 10 mol%.

The polymer can be prepared by addition polymerisation of the appropriate monomers in the appropriate proportions at polymerisation conditions using a free radical catalyst such as e.g. benzoyl peroxide, tert-butyl peroxy 2-ethyl hexanoate (TBPEH), t-butyl peroxybenzoate (TBP), or azobisisobutyronitrile. The reaction is carried out in an organic solvent such as e.g. xylene, toluene, amides such as N-methylpyrrolidone and N,N-dimethylformamide, ethers such as dioxane, THF and diethyl ether, butyl acetate, n-butanol, 2-ethoxyethanol, cyclohexanone, methyl-isoamylketone, 2-methoxyethanol, 2-butoxyethanol, 2-ethoxyethyl acetate, and mixtures thereof. Polymerisation is preferably carried out at a temperature in the range of 70-140°C although higher temperatures may be used providing that the solvent and the catalyst are adapted thereto. Within this range the use of higher temperatures produces polymers of lower molecular weight. Polymerisation may be carried out by heating all the polymer ingredients in the solvent or preferably by gradually adding the monomers and catalyst to the heated solvent. The latter procedure produces polymers of lower molecular weight.

The present invention also provides for the use of the film-forming polymer of the invention in a self-polishing paint. It further provides self-polishing anti-fouling paints containing as its essential components:
- one or more film-forming polymers according to the invention; and
- one or more anti-foulants.

The antifoulant used as the other essential component in the coating composition of the present invention may be any of conventionally known antifoulants. The known antifoulants are roughly divided into inorganic compounds, metal-containing organic compounds, and metal-free organic compounds.

Examples of the inorganic compounds include copper compounds (e.g. copper sulphate, copper powder, cuprous thiocyanate, copper carbonate, copper chloride, and the traditionally preferred cuprous oxide), zinc sulphate, zinc oxide, nickel sulphate, and copper nickel alloys.

Examples of the metal-containing organic compounds include organo-copper compounds, organo-nickel compounds, and organo-zinc compounds. Also usable are manganese ethylene bis dithiocarbamate (maneb), propineb, and the like. Examples of the organo-copper compounds include copper nonylphenolsulphonate, copper bis(ethylenediamine) bis(dodecylbenzenesulphonate), copper acetate, copper naphtenate, copper pyrithione and copper bis(pentachlorophenolate). Examples of the organo-nickel compounds include nickel acetate and nickel dimethyldithiocarbamate. Examples of the organo-zinc compounds include zinc acetate, zinc carbamate, , bis(dimethylcarbamoyl) zinc ethylene-bis(dithiocarbamate), zinc dimethyldithiocarbamate, zinc pyrithione, and zinc ethylene-bis(dithiocarbamate). As an example of mixed metal-containing organic compound, one can cite (polymeric) manganese ethylene bis dithiocarbamate complexed with zinc salt (mancozeb).

Examples of the metal-free organic compounds include N-trihalomethylthiophthalimides, trihalomethylthiosulphamides, dithiocarbamic acids, N-arylmaleimides, 3-(substituted amino)-1,3 thiazolidine-2,4-diones, dithiocyano compounds, triazine compounds, oxathiazines and others.

Examples of the N-trihalomethylthiophthalimides include N-trichloromethylthiophthalimide and N-fluorodichloromethylthiophthalimide. Examples of the dithiocarbamic acids include bis(dimethylthiocarbamoyl) disulphide, ammonium N-methyldithiocarbamate and ammonium ethylene-bis(dithiocarbamate).

Examples of trihalomethylthiosulphamides include N-(dichlorofluoromethylthio)N',N'-dimethyl-N-phenylsulphamide and N-(dichlorofluoromethylthio)-N',N'-dimethyl-N-(4-methylphenyl)sulphamide.

Examples of the N-arylmaleimides include N-(2,4,6-trichlorophenyl)maleimide, N-4 tolylmaleimide, N-3 chlorophenylmaleimide, N-(4-n-butylphenyl)maleimide, N-(anilinophenyl)maleimide, and N-(2,3-xylyl)maleimide.

Examples of the 3-(substituted amino)-1,3-thiazolidine-2,4-diones include 2-(thiocyanomethylthio)-benzothiazole, 3-benzylideneamino-1, 3-thiazolidine-2,4-dione, 3-(4-methylbenzylideneamino)-1,3-thiazolidine-2,4-dione, 3-(2-hydroxybenzylideneamino)-1,3-thiazolidine-2,4-dione,3-(4-dimethylaminobenzylideamino)-1,3-thiazolidine-2,4-dione, and 3-(2,4-dichlorobenzylideneamino)-1,3-thiazolidine-2,4-dione.

Examples of the dithiocyano compounds include dithiocyanomethane, dithiocyanoethane, and 2,5-dithiocyanothiophene.

Examples of the triazine compounds include 2-methylthio-4-butylamino-6-cyclopropylamino-s-triazine.

Examples of oxathiazines include 1,4,2-oxathiazines and their mono- and di-oxides such as disclosed in PCT patent WO 98/05719: mono- and di-oxides of 1,4,2-oxathiazines with a substituent in the 3 position representing (a) phenyl; phenyl substituted with 1 to 3 substituents independently selected from hydroxyl, halo, C1-12 alkyl, C5-6 cycloalkyl, trihalomethyl, phenyl, C1-C5 alkoxy, C1-5 alkylthio, tetrahydropyranyloxy, phenoxy, C1-4 alkylcarbonyl, phenylcarbonyl, C1-4 alkylsulfinyl, carboxy or its alkali metal salt, C1-4 alkoxycarbonyl, C1-4 alkylaminocarbonyl, phenylaminocarbonyl, tolylaminocarbonyl, morpholinocarbonyl, amino, nitro, cyano, dioxolanyl or C1-4 alkyloxyiminomethyl; naphtyl; pyridinyl; thienyl; furanyl; or thienyl or furanyl substituted with one to three substituents independently selected from C1-C4 alkyl, C1-4 alkyloxy, C1-4 alkylthio, halo, cyano, formyl, acetyl, benzoyl, nitro, C1-C4 alkyloxycarbonyl, phenyl, phenylaminocarbonyl and C1-4 alkyloxyiminomethyl; or (b) a substituent of generic formula

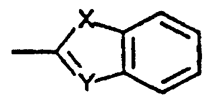

Wherein X is oxygen or sulphur; Y is nitrogen, CH or C(C1-4 alkoxy); and the C6 ring may have one C1-4 alkyl substituent; a second substituent selected from C1-4 alkyl or benzyl being optionally present in position 5 or 6.

Other examples of the metal-free organic compounds include 2,4,5,6-tetrachloroisophthalonitrile, N,N-dimethyl-dichlorophenylurea, 4,5-dichloro-2-n-octyl-4-isothiazoline-3-one, N,N-dimethyl-N'-phenyl-(N-fluorodichloromethylthio)sulfamide, tetramethylthiuramdisulphide, 3-iodo-2-propinylbutyl carbamate, 2-(methoxycarbonylamino)benzimidazole, 2,3,5,6-tetrachloro-4-(methylsulphonyl)pyridine, diiodomethyl-p-tolyl sulphone, phenyl(bispyridine)bismuth dichloride, 2-(4-thiazolyl)benzimidazole, dihydroabietyl amine, N-methylol formamide and pyridine triphenylborane.

According to a preferred embodiment, the use as anti-foulant of the oxathiazines disclosed in WO-A-9505739 has the added advantage (disclosed in EP-A-823462) of increasing the self-polishing properties of the paint.

Among the fouling organisms, barnacles have proved to be the most troublesome, because they resist to most biocides. Accordingly, the paint formulation should preferably include at least an effective amount of at least one barnaclecide, such as cuprous oxide or thiocyanate. A preferred barnaclecide is disclosed in EP-A-831134. EP-A-831134 discloses the use of from 0.5 to 9.9 wt%, based on the total weight of the dry mass of the composition, of at least one 2-trihalogenomethyl-3-halogeno-4-cyano pyrrole derivative substituted in position 5 and optionally in position 1, the halogens in positions 2 and 3 being independently selected from the group consisting of fluorine, chlorine and bromine, the substituent in position 5 being selected from the group consisting of C1-8 alkyl, C1-8 monohalogenoalkyl, C5-6 cycloalkyl, C5-6 monohalogenocycloalkyl, benzyl, phenyl, mono- and di-halogenobenzyl, mono-and di-halogenophenyl, mono- and di-C1-4-alkyl benzyl, mono- and di-C1-4- alkyl phenyl, monohalogeno mono-C1-4-alkyl benzyl and monohalogeno mono-C1-4-alkyl phenyl, any halogen on the substituent in position 5 being selected from the group consisting of chlorine and bromine, the optional substituent in position 1 being seclected from C1-4 alkyl and C1-4 alkoxy C1-4 alkyl.

One or more anti-foulants selected from such anti-foulants are employed in the present invention. The anti-foulants are used in such an amount that the proportion thereof in the solid contents of the coating composition is usually from 0.1 to 90% by weight, preferably 0.1 to 80% by weight, and more preferably from 1 to 60% by weight. Too small anti-foulant amounts do not produce an antifouling effect, while too large anti-foulant amounts result in the formation of a coating film which is apt to develop defects such as cracking and peeling and thus becomes less effective in anti-fouling property.

The paint further contains pigment(s), solvent(s) and additive(s).

The paint composition contains one or more pigments (or fillers).

The paint composition can contain one or more pigments which are "active" pigments, i.e. sparingly soluble in sea water. These pigments have a sea water solubility such that the pigment particles do not survive at the paint surface. These pigments have the effect of inducing the overall smoothing which the relatively-moving sea water exerts on the paint film, minimising localised erosion and preferentially removing excrescences formed during the application of the paint. Sparingly soluble pigments have long been used in self-polishing anti-fouling paints. Typical examples are cuprous thiocyanate, cuprous oxide, zinc oxide, cupric acetate meta-arsenate, zinc chromate, zinc dimethyl dithiocarbamate, zinc ethylene bis(dithiocarbamate) and zinc diethyl dithiocarbamate. The preferred sparingly soluble pigments are zinc oxide, cuprous oxide and cuprous thiocyanate. Mixtures of sparingly soluble pigments can be used, e.g. zinc oxide, which is most effective at inducing the gradual dissolution of the paint, can be mixed with cuprous oxide, cuprous thiocyanate, zinc dimethyl or diethyl dithiocarbamate, or zinc ethylene bis-(dithiocarbamate) which are more effective marine biocides; the most preferred is a mixture of zinc oxide with cuprous oxide or thiocyanate.

The paint composition can contain one or more pigments that are highly insoluble in sea water, such as titanium dioxide, talc or ferric oxide. Such highly insoluble pigments can be used at up to 40 percent by weight of the total pigment component of the paint. Highly insoluble pigments have the effect of retarding the erosion of the paint.

The paint composition can contain one or more pigments or dyes that impart a colour to the paint, e.g. titanium dioxide, cuprous oxide or iron oxide.

The proportion of pigment to polymer is generally such as to give a pigment volume concentration of at least 25 percent, preferably at least 35 percent, in the dry paint film. The upper limit of pigment concentration is the critical pigment volume concentration. Paints having pigment volume concentrations of up to about 50 percent, for example, have been found very effective.

Examples of the organic solvent include aromatic hydrocarbons such as xylene and toluene; aliphatic hydrocarbons such as hexane and heptane, esters such as ethyl acetate and butyl acetate; amides such as N-methylpyrrolidone and N,N-dimethylformamide; alcohols such as isopropyl alcohol and butyl alcohol; ethers such as dioxane, THF and diethyl ether; and ketones such as methyl ethyl ketone, methyl isobutyl ketone and methyl isoamyl ketone. The solvent may be used alone or in combination thereof.

Solvents are used to obtain the desired viscosity at the expected operating temperature for the application on the ship hull, preferably in the range of 5-50 dPas, more preferably of 10-20 dPa.s, most preferably of about 15 dPa.s. Obviously, the nature of the solvents is also adapted to the expected operating temperature for the application on the ship hull, taking into account the desired drying time.

Additive ingredients may optionally be incorporated into the coating composition of the present invention thus prepared. Examples of the additive ingredients are dehumidifiers, and additives ordinarily employed in coating compositions as anti-sagging agents, anti-flooding agents, thixotropic and anti-settling agents, stabilisers and anti-foaming agents.

Providing there is enough monomer A, the erosion rate of the copolymers of the invention in an alkaline solution (such as sea water, which typically has a pH of around 8) can be adjusted by simply varying the content in comonomer B. The use of comonomer B at the right dosage has no negative effect on the properties of the final paint. There appears to be a direct relation between the hydrolysis rate of the copolymers of the invention in seawater and the erosion rate of self-polishing paints prepared with the copolymers of the invention in seawater. Thus, this invention makes it possible to design tin-free self-polishing coatings over a wide range of polishing rates.

Additionally, it has unexpectedly been found that a self-polishing effect is obtained even in neutral water, so that anti-fouling coatings can be developed which have self-polishing properties in freshwater (such as lake water or river water). This was totally unexpected because the present tin-based coatings have self-polishing properties only in alkaline water (such as sea water). Thus, the self-polishing anti-fouling paints of the invention can be used on ship hulls and other structures immersed in freshwater.

### EXAMPLES

### Determination of the solids content

The solids content of binder solutions was determined by weighing before and after heating a sample for 1 hour at 120°C [standard test methods ISO 3233/ASTM 2697/DIN 53219]. (Table, Properties, %)

### Determination of the viscosity

The viscosity of binder solutions and of paints was determined with a Brookfield at 25°C [ASTM test method D2196-86]. (Table, Properties, dPa.s)

### Determination of the molecular weight distribution of the polymers

The molecular weight distribution was determined by gel permeation chromatography (GPC) with tetrahydrofuran (THF) as solvent and polystyrene as reference. The weight average molecular weight (Mw) and the polydispersity (d = Mw/Mn) are reported in the Table.

### Evaluation of the hydrolysability of the binders

The hydrolysability has been evaluated by dipping draw-downs in an alkaline solution (NaOH, pH = 13.4) and determining the number of minutes (induction time) before hydrolysis could be observed.

For a more precise evaluation, binder or paint draw-downs on plates were fixed on a hexagonal drum and rotated in an alkaline solution (pH = 11.3, 12.3 or 13.3). The erosion of the film was determined by measuring its thickness at regular intervals. Erosion is reported as a rate expressed in um/hour.

### Evaluation of the thixotropic factor

The thixotropic factor is determined by measuring the viscosity with a rotation viscosimeter at a low and a high speed. It is defined as the ratio of the viscosity at 5.66 rpm to the viscosity at 181 rpm. [standard methods DIN 53018, 53019, 53214]

### Evaluation of the polishing of paints

The erosion rate is the average decrease in film thickness (expressed in um/month) per month over the whole test (1 month = 30 days).

Stainless steels discs, 20 cm in diameter, were protected with a standard anti-corrosive system (300 µm in dry film thickness). Two layers of the self-polishing paint to be tested were applied, to give a total dry film thickness between 200 and 300 µm. The tests were carried out in constantly refreshed natural seawater, at a constant temperature of 20 °C. The discs were rotated at 1000 rpm, corresponding to about 34 km/hr (18 knots/hr) at 9 cm from the centre.

The total dry film thickness was determined at 7-week intervals, after allowing the paint to dry during one day. It was measured at a number of fixed points, each located at 9 cm from the centre of the discs.

### EXAMPLES 1 TO 20

### Preparation of the binder, example 1-20

The preparation is described more particularly for the specific composition of example 17; all monomer compositions are mentioned in the Table I, as well as the results obtained. Also reported in the Table are the calculated values for Tg. The other operating conditions are identical for all examples, unless stated otherwise.

533 g xylene was put in a 3L 4-necked flask and kept under nitrogen. The four necks of the flask were equipped with stirring means, a reflux cooler, a thermometer for temperature control of the reaction, and means for addition of the monomers.

A premix was prepared in a separate vessel; it contained:
- 495 g of tributylsilyl methyl acrylate (TBSiMA), [26.5 mol% of monomers]
- 124 g of vinyl pyrrolidone (VP), [17.0 mol% of monomers]
- 371 g of MMA, [56.5 mol% of monomers]
- 19.8 g (= 2% on total monomer weight) of TBPEH, and
- 81 g of xylene.

The premix was added drop by drop to the reaction vessel (total time: about 3 hours) whilst maintaining the temperature at 90°C. Thirty minutes after the end of the addition of the premix, five post-additions of 0.2 % TBPEH were made at intervals of 45 minutes. Some 15 minutes after the last post addition, the temperature was increased up to 120°C during one hour. After cooling the binder solution was thinned down with 277 g xylene to a viscosity of 25 dPa.s.

In examples 18 and 19, the solvent used was a mixture of 95 pbw of xylene and 5 pbw of butanol.

### COMPARISON EXAMPLES A AND B

Resins A and B were prepared according the procedure described for ex 1-20 using as monomers:
- 26 mol% of tributyl-X methacrylate, wherein X=Sn (ex. A) or Si (ex. B);
- 74 mol% of methyl methacrylate.

The binder properties are given in table I.

The erosion properties of the resins were tested according to the accelerated methods (table II). After 8 hours, the average erosion rate was:
- example A: 4 um (average of values ranging from 3.7 to 4.3 um)
- example B: 0.4 um (average of values ranging from 0.3 to 0.5 um).

These examples demonstrate that tributylsilyl methacrylate-MMA copolymer hydrolyses one order of magnitude less than the corresponding tributyltin methacrylate-MMA copolymer in typical conditions observed in marine use. It was thus not expectable for the binders of the invention to have the desired erosion properties

### Preparation of the paint, example 21

A paint was prepared having the following composition (the vol% figures are calculated on the total solids in the dry paint):
- the resin solution of example 17 28.60 pbw [56 vol%]
- cuprous oxide 36.20 pbw [22 vol%]
- zinc oxide 13.70 pbw [09 vol%]
- iron oxide 01.40 pbw [01 vol%]
- 4,5-dichloro-2-n-octyl-4-isothiazoline-3-one 07.20 pbw [06 vol%] (as 30 wt% solution)
- thixotropic additives 01.70 pbw [04 vol%]
- molecular sieve (additive) 01.00 pbw [02 vol%]
- xylene 10.50 pbw

### Preparation of paints, examples 22-33 + comparative examples C and D See table III

The paints were prepared with the following composition (the vol% figures are calculated on the total solids in the dry paint):
- resin solids selected from example 1-20,A,B 13.8 pbw
- dioctylphtalate 02.0 pbw
- cuprous oxide 30.3 pbw
- zinc oxide 24.6 pbw
- iron oxide 00.8 pbw
- 4,5-dichloro-2-n-octyl-4-isothiazoline-3-one 03.7 pbw (as 30 wt% solution)
- thixotropic additives 00.9 pbw
- molecular sieve (additive) 01.0 pbw
- xylene, including xylene from resin solutions 23.9 pbw

**Table IV;**

| Paint properties of ex. 21 compared to comparative ex. 34 and 35 | | | | | |
|---|---|---|---|---|---|
| Paint ex. | Viscosity dPa.s | Thix. factor | Vol. Solids % | erosion in seawater µm/month | Fouled area after 1 year % -raftpanel |
| 21 | 12 | 3 | 45 | 7 | 0 |
| 34(C) | 15 | 4 | 46 | 5 | 0 |
| 35(C) | 12 | 5 | 44 | 1.5 | 25 |

The claimed paint example 21 had normal paint properties and a good erosion rate in seawater. The erosion rate was of the same level of the tin based reference example, 34. The reference silylacrylate paint formulation, ex. 35, had a considerable lower erosion rate.

The paints of ex 21, 34 and 35 thus obtained have also been tested for anti-fouling activity by applying them to a plaque over a vinyl resins/tar anti-corrosive paint, mounting the plaques on a panel and immersing the panels from a raft in a river estuary off Southern Netherlands during 12 months. Each panel also included plaques coated with a non-toxic control (which became heavily fouled with seaweed and some animal life within 4 weeks).

No weed or animal fouling has been observed on the panels coated with the paint of the invention (ex. 21) and the TBT-based reference (ex 34). The algal slime was practically non-existent. This in contrast to the tributylsilylmethacrylate based reference paint formulation (ex 35) which was for 25 % covered with algae and algal slime.

### Erosion properties at alkaline conditions.

The erosion rate of paint examples 22-35 were determined in alkaline conditions (pH 11.3, 12.3 or 13.3). The results are presented in table III.
It is evident from this table that the paints based on the claimed new binders eroded well at a lower pH or eroded at least faster at the same pH than the TBSilyl-based reference (ex 35). A part of the claimed paints eroded at a lower pH than that is needed for the erosion of the TBT-based reference (ex. 34)

**TABLE I**

| | **Composition wt%** | | | **Properties** | | | | **Calc.** |
|---|---|---|---|---|---|---|---|---|
| **Ex.** | **A** | **B** | **C** | **%** | **dPa.s** | **Mw** | **d** | **Tg °C** |
| 1 | 25 | 5 | 70 | 50.7 | 50 | 39450 | 2.7 | 67 |
| 2 | 25 | 7.5 | 67.5 | 51 | 62 | 41000 | 2.7 | 66 |
| 3 | 25 | 10 | 65 | 50.2 | 58 | 43300 | 2.7 | 65 |
| 4 | 25 | 12.5 | * | 55.4 | 44 | 51900 | 3,0 | 34 |
| 5 | 32.5 | 5 | 62.5 | 54.9 | 71 | 38724 | 2.4 | 58 |
| 6 | 32.5 | 7.5 | 60 | 49.5 | 23 | 39700 | 2.5 | 57 |
| 7 | 32.5 | 10 | 57.5 | 49.4 | 29 | 38950 | 2.5 | 55 |
| 8 | 32.5 | 12.5 | 55 | 53.2 | 62 | 42754 | 2.5 | 54 |
| 9 | 32.5 | 20 | 47.5 | 50.6 | 50 | 45616 | 2.4 | 51 |
| 10 | 45 | 5 | 50 | 55.8 | 27 | 38000 | 2.8 | 43 |
| 11 | 45 | 7.5 | 47.5 | 55.1 | 22 | 41000 | 2.6 | 42 |
| 12 | 45 | 10 | 45 | 54.7 | 29 | 42100 | 2.6 | 41 |
| 13 | 45 | 12.5 | 42.5 | 54.9 | 34 | 41650 | 2.6 | 40 |
| 14 | 50 | 5 | 45 | 55.06 | 19 | 41508 | 2.7 | 38 |
| 15 | 50 | 7.5 | 42.5 | 54.3 | 19 | 41150 | 2.6 | 37 |
| 16 | 50 | 10 | 40 | 53.9 | 17 | 44250 | 2.8 | 36 |
| 17 | 50 | 12.5 | 37.5 | 54.8 | 25 | 48527 | 2.6 | 35 |
| 18 | 50 | 15 | 35 | 53.2 | 20 | 48766 | 2.7 | 34 |
| 19 | 50 | 20 | 30 | 53 | 21 | 46926 | 2.6 | 32 |
| 20 | 57 | 12.5 | 30.5 | 53.7 | 12 | 44000 | 2.8 | 28 |
| A | 57# | 0 | 43 | 56 | 25 | 59000 | 2.2 | 24 |
| B | 50 | 0 | 50 | 55 | 10 | 36600 | 2.8 | 40 |
| Monomer A: tri(n-butyl)silyl methacrylate (or # : TBTMA) | | | | | | | | |
| Monomer B: vinyl pyrrolidone | | | | | | | | |
| Monomer C: methyl methacrylate | | | | | | | | |

| | | | | | | | | |
|---|---|---|---|---|---|---|---|---|
| * ( except in example 4: methyl methacrylate = 36.25, methyl acrylate = 21.25, n-butyl acrylate=5.0) | | | | | | | | |

**TABLE II**

| **example N°** | **Alkaline sensitivity** | **Erosion** | **rate (micron/hour)** | |
|---|---|---|---|---|
| | **Induction* time (minutes)** | **pH 11.3** | **pH 12.3** | **pH 13.3** |
| 1 | >700 | 0 | 0 | 1 |
| 2 | >700 | 0 | 0 | 1 |
| 3 | >700 | 0 | 0 | 1 |
| 4 | >700 | 0 | 0 | 1 |
| 5 | 500 | 0 | 0 | 2 |
| 6 | 500 | 0 | 0 | 2 |
| 7 | 390 | 0 | 0 | 3 |
| 8 | 210 | 0 | 0 | 3 |
| 10 | 170 | 0 | 0 | 3 |
| 9 | 160 | 0 | 0 | 4 |
| 11 | 150 | 0 | 0.8 | nd |
| 12 | 150 | 0 | 1.2 | nd |
| 14 | 110 | 0 | 0.9 | nd |
| 13 | 90 | 0 | 10 | nd |
| 15 | 90 | 0 | 0.4 | nd |
| 16 | 90 | 0 | 2.9 | nd |
| 17 | 60 | 5 | 28 | nd |
| 18 | 50 | 15 | nd | nd |
| 20 | 40 | 31 | nd | nd |
| 19 | 30 | 100 | nd | nd |
| A | 2 | nd | 4.0 | nd |
| B | > 700 | 0 | 0.4 | 1 |

| | | | | |
|---|---|---|---|---|
| * pH = 13.4 | | | | |

**Table III:**

| Paint erosion at pH 11.3, 12.3 or 13.3 | | | | |
|---|---|---|---|---|
| Paint example | used binder example | Paint erosion^{$} | | |
| | | pH 11.3 | pH 12.3 | pH 13.3 |
| 22 | 1 | nd | 0 | 2 |
| 23 | 2 | nd | 0 | 2 |
| 24 | 3 | nd | 0 | 3 |
| 25 | 6 | nd | 0 | 8 |
| 26 | 7 | nd | 0 | 12 |
| 27 | 10 | nd | 0 | 40 |
| 28 | 11 | 0 | >69 | nd |
| 29 | 12 | 2.1 | nd | nd |
| 30 | 13 | 8.6 | nd | nd |
| 31 | 15 | 6.0 | nd | nd |
| 32 | 16 | 7.2 | nd | nd |
| 33 | 20 | 32.2 | nd | nd |
| C | A | nd | 5.7 | nd |
| D | B | nd | 0 | 1.5 |

| | | | | |
|---|---|---|---|---|
| ^{$} in micron/hour | | | | |
| nd = not determined | | | | |

## Claims

1. Film-forming polymer prepared by polymerisation of:
- from 4 to 50 mol% of monomer units A selected from the group consisting of the trialkylsilyl esters of an ethylenically unsaturated carboxylic acid, and mixtures thereof;
- from 5 to 45 mol% of monomer units B selected from the group consisting of the N-vinyl lactam monomers of general formula CH2=CH-NR""'-CO-R'| , the N-vinyl amides of general formula CH2=CH-N-CO-R", the monomers of general formula CH2=CR"'-COO-R""-NR""'-CO-R'|, the monomers of general formula CH2=CR"'-COO-R""-N-CO-R", 2-pyrrolidone-1-isoprenyl ketone, and mixtures thereof, wherein
- R' is a n-alkylidene radical having 2 to 8 carbon atoms,
- R" is selected from the group consisting of alkyl, cycloalkyl, aryl, alkylaryl and arylalkyl radicals having a maximum of 18 carbon atoms,
- R"' is H or CH3,
- R"" is a n-alkylidene radical having from 1 to 8 carbon atoms,
- R""' is H or R",
and
- the balance of the monomer units being monomer units C selected from the group consisting of the esters of ethylenically unsaturated carboxylic acids with C1-C18 alcohols, styrene, alpha-methyl styrene, vinyl toluenes, and mixtures thereof.

2. Film-forming polymer according to claim 1, wherein the ethylenically unsaturated monomer in monomer units A is selected from the group consisting of acrylic acid, methacrylic acid, maleic acid, fumaric acid, and mixtures thereof, preferably selected from the group consisting of acrylic acid, methacrylic acid, and mixtures thereof.

3. Film-forming polymer according to claim 1, wherein the alkyl groups of the trialkylsilyl radical in monomer units A are independently selected from the group consisting of C1 to C8 alkyl groups, preferably C3 and C4, more preferably isopropyl and n-butyl.

4. Film-forming polymer according to claim 1, wherein in monomer units B:
- R' is a n-alkylidene radical having 2 to 4 carbon atoms, preferably 3 carbon atoms, and/or
- R" is selected from the group consisting of alkyl, cycloalkyl, aryl, alkylaryl and arylalkyl radicals having 2 to 12 carbon atoms, preferably 2 to 6 carbon atoms, and/or
- R"' is CH3.

5. Film-forming polymer according to claim 1, wherein in monomer units C the esters are esters of ethylenically unsaturated carboxylic acids with C1-C10 alcohols, preferably with C1-C4 alcohols, more preferably with C1-C2 alcohols.

6. Film-forming polymer according to claim 1, wherein the ethylenically unsaturated monomer in monomer units C is selected from the group consisting of acrylic acid, methacrylic acid, maleic acid, fumaric acid, and mixtures thereof, preferably selected from the group consisting of acrylic acid, methacrylic acid, and mixtures thereof.

7. Film-forming polymer according to any one of claims 1 to 6, prepared by polymerisation of:
- from 8 to 40 mol%, preferably from 15 to 35 mol%, more preferably from 20 to 30 mol%, of monomer units A; and
- from 7.5 to 40 mol%, preferably from 10 to 30 mol%, more preferably from 15 to 20 mol%, of monomer units B; the balance of the monomer units being at least 10 mol% of monomer units C

8. Use of the film-forming polymer according to any one of claims 1 to 7 in a marine paint.

9. Use of the film-forming polymer according to any one of claims 1 to 7 in a self-polishing paint for use in freshwater.

10. Self-polishing anti-fouling paint containing as essential components:
- one or more film-forming polymers according to any one of claims 1 to 7; and
- one or more anti-foulant.
